(19) Europäisches Patentamt
European Patent Office
Office européen des brevets

(11) **EP 3 878 089 B1**

(12) **EUROPÄISCHE PATENTSCHRIFT**

(45) Veröffentlichungstag und Bekanntmachung des Hinweises auf die Patenterteilung:
**15.03.2023 Patentblatt 2023/11**

(21) Anmeldenummer: **19790442.8**

(22) Anmeldetag: **08.10.2019**

(51) Internationale Patentklassifikation (IPC):
**H02P 21/00** (2006.01) **H02P 21/22** (2016.01)

(52) Gemeinsame Patentklassifikation (CPC):
**H02P 21/00; H02P 21/22**

(86) Internationale Anmeldenummer:
**PCT/DE2019/100868**

(87) Internationale Veröffentlichungsnummer:
**WO 2020/094176 (14.05.2020 Gazette 2020/20)**

(54) **VERFAHREN UND VORRICHTUNG ZUR STELLWERTBEGRENZUNG FÜR DIE FELDORIENTIERTE STROMREGELUNG**

METHOD AND DEVICE FOR LIMITING SETPOINT VALUES FOR FIELD-ORIENTED CURRENT REGULATION

PROCÉDÉ ET DISPOSITIF DE LIMITATION DE VALEUR DE RÉGLAGE POUR LA RÉGULATION D'UN COURANT ORIENTÉE CHAMP

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2018 DE 102018127709**

(43) Veröffentlichungstag der Anmeldung:
**15.09.2021 Patentblatt 2021/37**

(73) Patentinhaber: **Schaeffler Technologies AG & Co. KG**
**91074 Herzogenaurach (DE)**

(72) Erfinder:
• **BARINBERG, Viktor**
**90491 Nürnberg (DE)**
• **DRENKHAHN, Georg**
**90409 Nürnberg (DE)**
• **PANKEVICH, Arkady**
**91325 Adelsdorf (DE)**

(56) Entgegenhaltungen:
DE-A1- 10 219 826         DE-A1-102012 205 371
DE-A1-102013 207 727      DE-A1-102016 221 315

• JUNWOO KIM ET AL: "Dynamic overmodulation in the synchronous reference frame for IPMSMs", ENERGY CONVERSION CONGRESS AND EXPOSITION (ECCE), 2012 IEEE, IEEE, 15. September 2012 (2012-09-15), Seiten 815-822, XP032467542, DOI: 10.1109/ECCE.2012.6342735 ISBN: 978-1-4673-0802-1

**Beschreibung**

Die Erfindung betrifft ein Verfahren und eine Vorrichtung zur Begrenzung von Stellwerten, genauer von Spannungskomponenten, für die feldorientierte Stromregelung, auch als Vektorsteuerung bekannt. Insbesondere zielt die Erfindung auf den Einsatz bei Permanentmagnet-Synchronmaschinen ab.

Bei Permanentmagnet-Synchronmaschinen zeigt sich, dass im Stand der Technik eine Stromregelung nahe der Spannungsgrenze, d.h. wenn die Ausgangsspannungen von Stromreglern dem maximal verfügbaren Spannungswert nahekommen, einen stabilen Betrieb der Synchronmaschine nicht garantieren kann.

Beim Betrieb nahe der Spannungsgrenze geht die Ansteuerbarkeit der Synchronmaschine verloren, das Verhalten der Synchronmaschine kann nicht kontrolliert werden. Es können kurzzeitig hohe Stromstärken auftreten, welche die Synchronmaschine beschädigen können. Die Strom-Dynamik, z.B. die Anstiegszeiten von Stromstärken im Stator der Synchronmaschine, ist nicht reproduzierbar.

Die vorgenannten Probleme können vermieden werden, wenn die Synchronmaschine hinreichend weit von der Spannungsgrenze entfernt betrieben wird, also eine ausreichend große Spannungsreserve für die Stromregelung gegeben ist. Dabei ist dann allerdings die elektrische Spitzen- und Dauerleistung reduziert, und die Energieeffizienz ist verringert.

Verschiedene Ansätze zur Verbesserung dieser Situation finden sich im Stand der Technik, etwa in D. Schröder, "Elektrische Antriebe - Regelung von Antriebssystemen",Springer-Lehrbuch, Springer, 2015, insbesondere Kapitel 16; Nguyen Phung Quang und J.-A. Dittrich, "Vector Control of the Three-Phase AC Machines", Springer 2014; **oder** T. Gemaßmer, "Effiziente und dynamische Drehmomenteinprägung in hoch ausgenutzten Synchronmaschinen mit eingebetteten Magneten", Dissertation, Karlsruher Institut für Technologie (KIT), Fakultät für Elektrotechnik und Informationstechnik, 2015.

Die vorgeschlagenen Ansätze führen aber allenfalls zu partiellen Verbesserungen, benötigen etwa teils nur ungenau bekannte Parameter der Synchronmaschine zur Berechnung von Zwischengrößen und hängen empfindlich von diesen Parametern ab, beseitigen nicht alle Betriebsbereiche mit ungenügender Ansteuerbarkeit, sind teils sehr komplex und/oder zeigen eine ungenügend reproduzierbare Dynamik.

Bei der feldorientierten Stromregelung werden die Spannungswerte bzw. Stromwerte der Phasen des Stators der Synchronmaschine in bekannter Weise auf ein zweidimensionales Koordinatensystem, dessen zueinander senkrechte Achsen üblicherweise mit d ("**direct**") und q ("**quadrature**") bezeichnet werden, transformiert. Dieses Koordinatensystem rotiert relativ zum Stator der Synchronmaschine und ruht relativ zum Rotor der Synchronmaschine. Die Transformation selbst heißt Park-Transformation, das zweidimensionale Koordinatensystem, auf das transformiert wird, heißt Park-Koordinatensystem. Die Park-Transformation kann über den Zwischenschritt einer, ebenfalls bekannten, Clarke-Transformation erfolgen, welche die Spannungswerte bzw. Stromwerte der Phasen des Stators der Synchronmaschine auf ein zweidimensionales, orthogonales, relativ zum Stator ruhendes Koordinatensystem transformiert. Die feldorientierte Stromregelung regelt die q- und d-Komponenten des Phasenstroms, Iq und Id, unabhängig voneinander, über separate Stromregler. Diese Stromregler ermitteln einen Stellwert für eine Spannungskomponente Uqr, die Stellgröße für Iq ist, bzw. einen Stellwert für eine Spannungskomponente Udr, die Stellgröße für Id ist. Die Komponente Iq ist die für das Drehmoment der Synchronmaschine vorwiegend verantwortliche Komponente.

Als weiterer Hintergrund zu der Erfindung ist Folgendes anzumerken: Beim Betrieb der Synchronmaschine ist die maximal verfügbare Phasenspannung Umax begrenzt, gemeinhin über die Zwischenkreisspannung UDC; die Begrenzung hängt von der Modulationsart ab, für übliche Raumzeigermodulation, und ohne die Erfindung darauf zu beschränken, gilt betragsmäßig Umax = 0,5777 UDC. Die verfügbare Spannung kann auf die beiden Komponenten Udr und Uqr aufgeteilt werden, wobei die Komponenten betragsmäßig begrenzt sind durch Werte Udriim und Uqnim. Wegen der Orthogonalität der q- und d-Achse gilt dabei stets $Umax^2 = Udr_{lim}^2 + Uqr_{lim}^2$ ; die Werte von Udr$_{lim}$ und Uqr$_{lim}$ sind dadurch einzeln nicht festgelegt. Beim Betrieb der Synchronmaschine kann es nun vorkommen, dass die erforderlichen Werte von Udr und Uqr die Begrenzung durch Umax übersteigen, dass also $Umax^2 < Udr^2 + Uqr^2$ gilt. In diesem Fall muss eine Verringerung einer oder beider Komponenten vorgenommen werden, um der Begrenzung zu genügen, so dass sich neue Werte $Udr'$ und $Uqr'$ ergeben. Der Stand der Technik kennt dazu im Wesentlichen drei Ansätze:

1) Priorisierung der q-Spannung, also von Uqr:

$$Uqr' = \min\left(\max(Uqr, -Umax), Umax\right)$$

$$Udr_{lim} = \sqrt{Umax^2 - Uqr'^2}$$

$$Udr' = \min\left(\max(Udr, -Udr_{lim}), Udr_{lim}\right)$$

Hier erhält also *Uqr',* abgesehen von einer etwaigen betragsmäßigen Beschränkung auf *Umax,* den zunächst erforderlichen Wert Uqr, auf Kosten von Udr. Dies ist, was unter Priorisierung von Uqr zu verstehen ist. Dabei bezeichnen in der üblichen Weise min(a,b) den kleineren der Werte a und b, und max(a,b) den größeren der beiden Werte a und b.

2) Priorisierung der d-Spannung, also von Udr:

$$Udr' = \min\left(\max(Udr, -Umax), Umax\right)$$

$$Uqr_{lim} = \sqrt{Umax^2 - Udr'^2}$$

$$Uqr' = \min\left(\max(Uqr, -Uqr_{lim}), Uqr_{lim}\right)$$

Hier erhält also *Udr',* abgesehen von einer etwaigen betragsmäßigen Beschränkung auf *Umax,* den zunächst erforderlichen Wert Udr, auf Kosten von Uqr.

3) Proportionale Reduktion, auch als proportionale oder lineare Priorisierung bekannt:

$$Udr' = \frac{Udr \cdot Umax}{\sqrt{Udr^2 + Uqr^2}}$$

$$Uqr' = \frac{Uqr \cdot Umax}{\sqrt{Udr^2 + Uqr^2}}$$

Als weitere Möglichkeit sei hier noch das Vorgehen gemäß der oben zitierten Schrift von Quang erwähnt. Hierbei wird eine Maschine betrachtet, die als Generator und als Motor betrieben werden kann. Laut Quang wird beim Motorbetrieb Ud priorisiert, beim Generatorbetrieb Uq.

Die Ansätze 1 und 2 sind unabhängig vom Betriebspunkt. Falls bei einem dieser Ansätze ein üblicher Proportional-Integral-Stromregler eine Sollstromvorgabe für Iq oder Id einregeln soll, und dabei die priorisierte Spannungskomponente Umax übersteigt, so verbleibt für die nicht-priorisierte Spannungskomponente keine Spannung. Die zur nicht-priorisierten Spannungskomponente gehörende Stromkomponente kann in der Folge äußerst instabil und nicht mehr kontrollierbar sein. Bei Ansatz 3 ergeben sich Probleme hinsichtlich der Dynamik und der stationären Einregelung der Sollströme an der Spannungsgrenze.

Ein Verfahren gemäß dem Oberbegriff des Anspruchs 1 und eine Vorrichtung gemäß dem Oberbegriff des Anspruchs 5 sind aus der DE 102 19 826 A1 bekannt.

Aufgabe der Erfindung ist es daher, ein Verfahren und eine entsprechende Vorrichtung anzugeben, welches bzw. welche bei einer Stromregelung für eine Permanentmagnet-Synchronmaschine eine Stellwertbegrenzung auf einfache Weise realisiert, wobei in allen Betriebsbereichen nahe der Spannungsgrenze der Synchronmaschine ein stabiler Betrieb der Synchronmaschine möglich sein soll.

Die Aufgabe wird hinsichtlich des Verfahrens gelöst durch ein Verfahren gemäß Anspruch 1 und hinsichtlich der Vorrichtung durch eine Vorrichtung gemäß Anspruch 5.

Die Unteransprüche enthalten vorteilhafte Ausgestaltungen.

Das erfindungsgemäße Verfahren zur Stellwertbegrenzung bei einer mehrphasigen Permanentmagnet-Synchronmaschine umfasst zunächst an sich bekannte Schritte zur Stromregelung: Es werden die Stromstärken für die einzelnen Statorphasen der Synchronmaschine gemessen und durch eine Park-Transformation auf das zweidimensionale Park-Koordinatensystem (d,q) transformiert; dies ergibt die Komponenten Id und Iq des Statorstromes. Durch bekannte Regeltechniken werden ein Stellwert für eine Spannungskomponente Udr, die Stellgröße für die Id-Komponente ist, und separat ein Stellwert für eine Spannungskomponente Uqr, die Stellgröße für die Iq-Komponente ist, bestimmt. Ist nun, wie oben erläutert, bei nicht ausreichender aktuell verfügbarer Maximalspannung eine Reduktion von Udr und/oder Uqr erforderlich, so werden erfindungsgemäß Stellwerte für die Stellgrößen Uqr und Udr derart betriebspunktabhängig begrenzt, dass diejenige der Spannungskomponenten Uqr, Udr priorisiert wird, deren entsprechende Komponente der induzierten Spannung $Uq_{ind}$, $Ud_{ind}$ den Strom am stärksten vom Kurzschlussstrompunkt wegtreibt. Dies heißt, Uqr wird priorisiert, falls die q-Komponente $Uq_{ind}$ der im Stator induzierten Spannung den Strom am stärksten von Kurzschlussstrompunkt wegtreibt; Udr wird priorisiert, falls die d-Komponente $Ud_{ind}$ der im Stator induzierten Spannung den Strom am stärksten von Kurzschlussstrompunkt wegtreibt. Unter dem Kurzschlussstrompunkt ist der Punkt im (d,q)-Koordinatensystem zu verstehen, welcher dem Kurzschlussstrom entspricht; die d- und q-Koordinaten des Kurzschlussstrompunkts entsprechen der d- bzw. q-Komponente des Kurzschlussstromes. Die Priorisierung von Uqr bzw. Udr erfolgt dabei jeweils entsprechend den oben erläuterten Ansätzen 1 bzw. 2. Die so ermittelten Stellwerte für Uqr und Udr werden auf entsprechende Spannungswerte für die einzelnen Statorphasen rücktransformiert. Die ermittelten Spannungswerte werden an die entsprechenden Statorphasen angelegt.

Die erfindungsgemäße Auswahl der zu priorisierenden Komponente ist einfach zu treffen und erzielt eine signifikante Stabilisierung für die Stromregelung im gesamten Betriebsbereich. Insbesondere funktioniert das Verfahren auch im Fall eines verschwindenden Iq-Sollwerts (Nullmomentenregelung) an der Spannungsgrenze. Die Synchronmaschine kann stabil an der Spannungsgrenze betrieben werden, da eingangs erwähnte Spannungsreserven zur Stabilisierung nicht erforderlich sind; dies wiederum verbessert die Energieeffizienz der Synchronmaschine. Der Wert der Iq-Komponente, welcher das Drehmoment der Synchronmaschine vorwiegend bestimmt, erreicht seinen Sollwert oder nähert sich diesem weitgehend an. Die Anstiegszeiten des Ist-Stromes (Stromdynamik) sind vergleichsweise kurz und reproduzierbar, auch an der Spannungsgrenze und selbst dann, wenn Iq seinen Sollwert nicht erreicht. Das Verfahren kann ohne Rückgriff auf Maschinenparameter der Synchronmaschine auskommen und ist somit unempfindlich gegenüber Fehlern in der Modellierung der Synchronmaschine.

In einer Ausführungsform wird die Auswahl der zu priorisierenden Spannungskomponente Udr oder Uqr wie folgt getroffen: Es wird der Kurzschlussstrom der Synchronmaschine ermittelt und hierzu die q-Komponente Iqks sowie die d-Komponente Idks. Stimmt nun das Vorzeichen von Iq - Iqks mit dem Vorzeichen von Id - Idks überein, so wird Udr priorisiert, andernfalls wird Uqr priorisiert. In einer spezifischen Ausgestaltung wird der Kurzschlussstrom der Synchronmaschine aus Maschinenparametern der Synchronmaschine und der Drehzahl der Synchronmaschine bestimmt. Beispiele für Maschinenparameter der Synchronmaschine umfassen, ohne aber darauf beschränkt zu sein, den magnetischen Fluss des permanent magnetisierten Rotors, Querinduktivität des Stators, Längsinduktivität des Stators, Widerstand der Spulen des Stators.

In einer anderen Ausführungsform werden ein Vorzeichen einer Drehzahl $\Omega$ der Synchronmaschine, ein Vorzeichen des separat ermittelten Stellwerts von Udr und ein Vorzeichen des separat ermittelten Stellwerts von Uqr ermittelt. Uqr wird priorisiert, falls das Vorzeichen des Stellwerts von Udr gleich ist dem Vorzeichen des Produkts aus $\Omega$ und dem Stellwert von Uqr, andernfalls wird Udr priorisiert. In dieser Ausführungsform genügt es also, die Vorzeichen der Drehzahl und der Stellwerte für die Spannungskomponenten Udr, Uqr zu kennen, um die zu priorisierende Spannungskomponente auszuwählen. Diese Ausführungsform lässt sich also mit besonders geringem Aufwand umsetzen. Der Vergleich der Vorzeichen des Stellwerts von Udr und des Produkts aus $\Omega$ **und** dem Stellwert von Uqr lässt sich auch in alternativen, aber hinsichtlich der Auswahl der zu priorisierenden Komponente mathematisch äquivalenten Formulierungen beschreiben. Es kann etwa das Vorzeichen des Produkts aus $\Omega$ **und** dem Stellwert von Uqr direkt aus den **Vorzeichen von** $\Omega$ **und** des Stellwerts von Uqr gefolgert werden, ohne das Produkt aus $\Omega$ **und** dem Stellwert von Uqr tatsächlich berechnen zu müssen. Falls die Vorzeichen durch Bits dargestellt werden, so kann der Vergleich der Vorzeichen durch **logische "UND"- und "ODER"**-Operationen mit den Bits durchgeführt werden. Die Erfindung ist jedoch ausdrücklich nicht auf spezifische Formen des Vorzeichenvergleichs beschränkt.

Die erfindungsgemäße Vorrichtung zur Stellwertbegrenzung bei der feldorientierten Stromregelung einer mehrphasigen Permanentmagnet-Synchronmaschine umfasst eine Prozessoreinheit zur Datenverarbeitung und eine Speichereinheit zur Datenspeicherung. Erfindungsgemäß sind in der Vorrichtung Programmanweisungen gespeichert, um eine Stellwertbegrenzung entsprechend dem vorstehend erläuterten erfindungsgemäßen Verfahren durchzuführen. Insbesondere kann diejenige Spannungskomponente Udr oder Uqr für die Id-Komponente des Statorstromes bzw. für die Iq-Komponente des Statorstromes priorisiert werden, deren entsprechende Komponente der induzierten Spannung $Uq_{ind}$, $Ud_{ind}$ den Strom am stärksten vom Kurzschlussstrompunkt wegtreibt. Die Bedeutung der Priorisierung einer Spannungskomponente sowie die Spannungs- und Stromkomponenten selbst wurden bereits im Zusammenhang mit dem Verfahren erläutert.

In einer Ausführungsform sind in der Speichereinheit der Vorrichtung Maschinenparameter der Synchronmaschine gespeichert. Die Vorrichtung ist dazu ausgebildet, eine Drehzahl der Synchronmaschine zu empfangen, und die Vorrichtung ist programmiert, unter Verwendung der Maschinenparameter und der Drehzahl eine Stellwertbegrenzung durchzuführen, bei der der Kurzschlussstrom der Synchronmaschine aus der Drehzahl und den Maschinenparametern ermittelt wird, und die q-Komponente Iqks sowie die d-Komponente Idks des Kurzschlussstromes bestimmt werden. Die Vorrichtung vergleicht sodann das Vorzeichen von Iq - Iqks mit dem Vorzeichen von Id - Idks. Stimmen die Vorzeichen überein, so wird Udr priorisiert, andernfalls wird Uqr priorisiert.

In einer anderen Ausführungsform der Vorrichtung ist die Vorrichtung insbesondere dazu ausgebildet, **ein Vorzeichen der Drehzahl $\Omega$ der Synchronmaschine, ein** Vorzeichen eines separat ermittelten Stellwerts von Udr und ein Vorzeichen eines separat ermittelten Stellwerts von Uqr zu ermitteln. Die Vorrichtung vergleicht dann das Vorzeichen des Stellwerts von Udr mit dem Vorzeichen des Produkts aus $\Omega$ **und** dem Stellwert von Uqr. Stimmen die Vorzeichen überein, so wird Uqr priorisiert, andernfalls wird Udr priorisiert. Wir verweisen auf die Ausführungen zum Vorzeichenvergleich im Zusammenhang mit der vorstehenden Erläuterung des erfindungsgemäßen Verfahrens.

Nachfolgend werden die Erfindung und ihre Vorteile unter Bezugnahme auf die beigefügten Zeichnungen näher erläutert.

Figur 1          zeigt ein Auswahlschema zur erfindungsgemäßen Auswahl der priorisierten Spannungskomponente.

Figur 2          zeigt ein weiteres Auswahlschema zur erfindungsgemäßen Auswahl der priorisierten Spannungskomponente.

Figur 3          zeigt schematisch eine Ausführungsform einer erfindungsgemäßen Vorrichtung.

Figuren 4 - 7    zeigen ein Beispiel des Verhaltens einer Stromregelung nach dem Stand der Technik.

Figuren 8 - 10   zeigen ein Beispiel des Verhaltens einer weiteren Stromregelung nach dem Stand der Technik

Figuren 11 - 14  zeigen ein Beispiel des Verhaltens der Stromregelung nach dem erfindungsgemäßen Verfahren.

Die Figuren zeigen lediglich Ausführungsformen der Erfindung; die Erfindung ist jedoch nicht auf die dargestellten Ausführungsformen beschränkt.

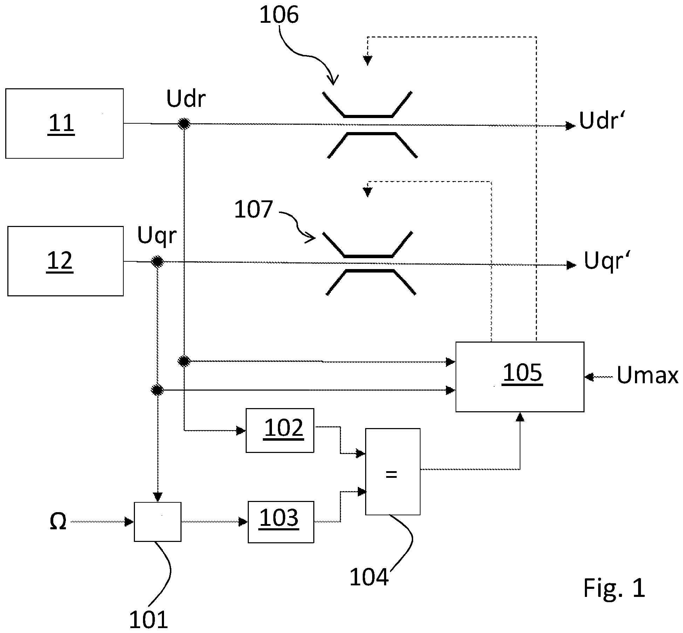

**Fig. 1** zeigt ein Auswahlschema zur erfindungsgemäßen Auswahl der priorisierten Spannungskomponente und die damit verbundene erfindungsgemäße Stellwertbegrenzung. Ein Stromregler 11 für die Id-Komponente des Stroms ermittelt einen Stellwert für die Spannungskomponente Udr. Ein Stromregler 12 für die Iq-Komponente des Stroms ermittelt einen Stellwert für die Spannungskomponente Uqr. Der Stellwert für **Uqr und eine Drehzahl $\Omega$ der Synchronmaschine dienen als Eingabe für Schritt 101, in welchem $\Omega$ und** der Stellwert von Uqr multipliziert werden. In Schritt 103 wird das Vorzeichen dieses Produktes bestimmt. Der Stellwert für Udr ist Eingabe für Schritt 102, in welchem das Vorzeichen des Stellwerts von Udr bestimmt wird. In Schritt 104 werden die in Schritt 102 und Schritt 103 ermittelten Vorzeichen verglichen, das Ergebnis des Vergleichs ist eine Eingabe für den Schritt 105. Der Stellwert von Udr, der Stellwert von Uqr und Umax bilden weitere Eingaben für Schritt 105. Abhängig vom Ergebnis des Vergleichs wird Uqr oder Udr priorisiert, und zwar, wie vorstehend bereits erläutert, Uqr, falls das Vorzeichen des Stellwerts von Udr gleich ist dem Vorzeichen des Produkts aus $\Omega$ **und** dem Stellwert von Uqr, andernfalls Udr. Aus dieser Priorisierung und Umax ergeben sich in Schritt 105 auch die Begrenzungen 106 für Udr und 107 für Uqr, und damit, wie oben bereits ausgeführt, *Udr'* und *Uqr'*.

Mathematisch äquivalente Herangehensweisen an den Vorzeichenvergleich sind ebenfalls denkbar, siehe die entsprechenden obigen Ausführungen im Kontext des erfindungsgemäßen Verfahrens.

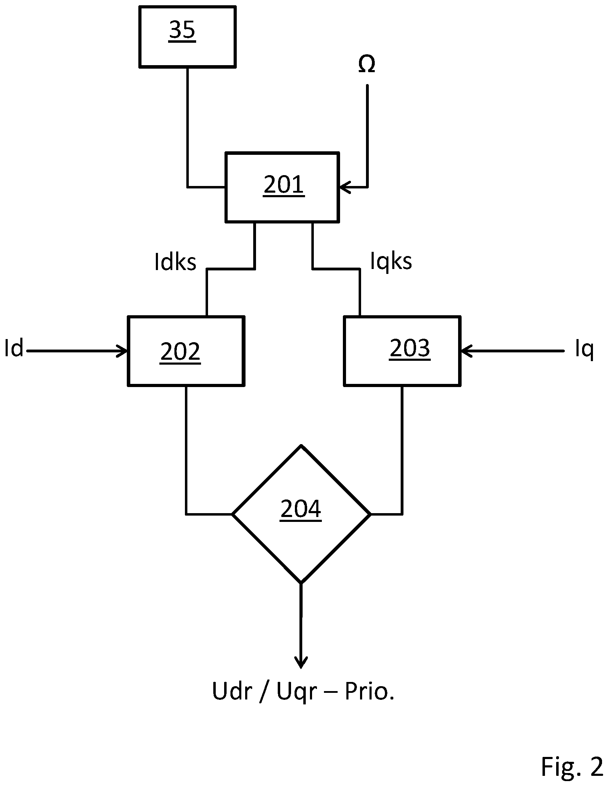

**Fig. 2** zeigt ein weiteres Auswahlschema für die zu priorisierende **Spannungskomponente. Aus einer Dreh- zahl $\Omega$ der Synchronmaschine und** Maschinenparametern 35 der Synchronmaschine wird in Schritt 201 ein Kurzschlussstrom der Synchronmaschine bestimmt, und daraus die q- und d-Komponenten des Kurzschlussstroms, Iqks und Idks. In Schritt 202 wird die Differenz Id - Idks gebildet, in Schritt 203 wird die Differenz Iq - Iqks gebildet. In Schritt 204 werden die Vorzeichen der in Schritt 202 und Schritt 203 gebildeten Differenzen verglichen. Stimmen die Vorzeichen überein, so wird Udr priorisiert, andernfalls wird Uqr priorisiert.

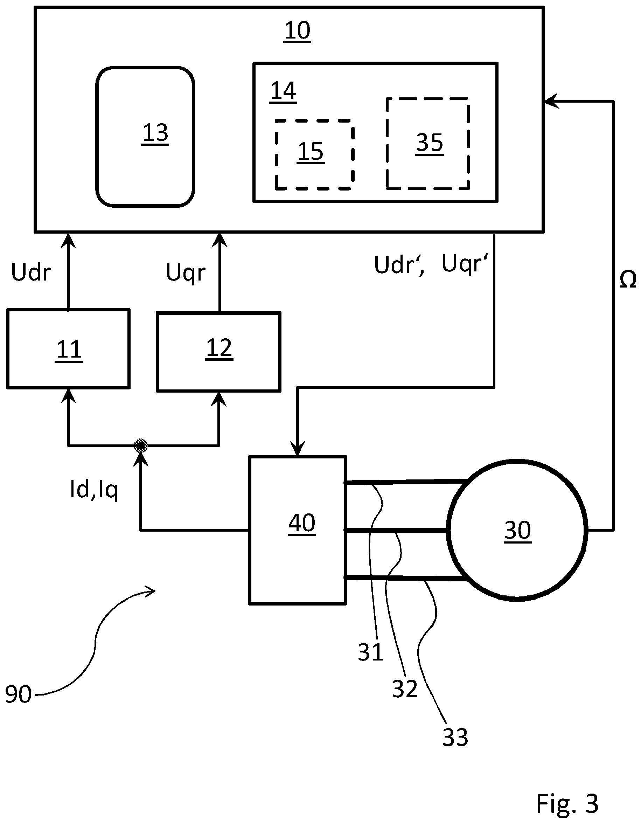

**Fig. 3** zeigt schematisch eine erfindungsgemäße Vorrichtung 10 zur Stellwertbegrenzung in Verbindung mit einer Anordnung 90 zur Ansteuerung einer Permanentmagnet-Synchronmaschine 30. Die Synchronmaschine 30 wird in dem gezeigten Beispiel über drei Phasen 31, 32, 33 mit Strom versorgt; die Erfindung ist jedoch auch auf Synchronmaschinen mit einer anderen Anzahl an Phasen anwendbar, etwa auf sechsphasige Synchronmaschinen. In der gezeigten Darstellung übernimmt eine Ansteuereinheit 40 sowohl die Versorgung der einzelnen Phasen 31, 32, 33 mit Spannung als auch die Park-Transformation von Spannungsund/oder Stromwerten der drei Phasen 31, 32, 33 auf entsprechende d- und q-Komponenten, sowie die inverse Park-Transformation. Die Vorrichtung 10 umfasst eine Prozessoreinheit 13 zur Datenverarbeitung und eine Speichereinheit 14. In der Speichereinheit 14 sind Programmanweisungen 15 gespeichert, welche von der Vorrichtung 10, insbesondere der Prozessoreinheit 13, abgearbeitet werden können, um eine erfindungsgemäße Stellwertbegrenzung auszuführen. In der Speichereinheit 14 können optional auch Maschinenparameter 35 der Synchronmaschine 30 gespeichert sein, welche für bestimmte Ausführungsformen des erfindungsgemäßen Verfahrens erforderlich sind.

Die Vorrichtung 10 ist dazu ausgebildet, eine Drehzahl $\Omega$ der Synchronmaschine 30 zu erfassen, und ferner dazu, einen durch einen Stromregler 11 für die Id-Komponente des Phasenstromes ermittelten Stellwert für die Spannungskomponente Udr und einen durch einen Stromregler 12 für die Iq-Komponente des Phasenstromes ermittelten Stellwert für die Spannungskomponente Uqr zu erfassen. Hieraus ermittelt die Vorrichtung 10 die jeweils zu priorisierende Spannungskomponente, etwa gemäß dem in Fig. 1 oder Fig. 2 erörterten Verfahren, sowie die sich dadurch ergebenden Spannungswerte *Udr'* und *Uqr'*. *Udr'* und *Uqr'* werden an die Ansteuereinheit 40 gemeldet und die Ansteuereinheit 40 ermittelt daraus durch inverse Park-Transformation die an die einzelnen Phasen 31, 32, 33 jeweils anzulegende Spannung. Zur Ermittlung der Stellwerte für Udr und Uqr empfangen die Stromregler 11 bzw. 12 die Werte der Stromkomponenten Id bzw. Iq; für bestimmte Ausführungsformen der Vorrichtung 10 können auch die Werte Id und Iq an die Vorrichtung 10 gemeldet werden, etwa dann, wenn die Vorrichtung 10 dazu ausgebildet ist, ein Verfahren gemäß Fig. 2 durchzuführen.

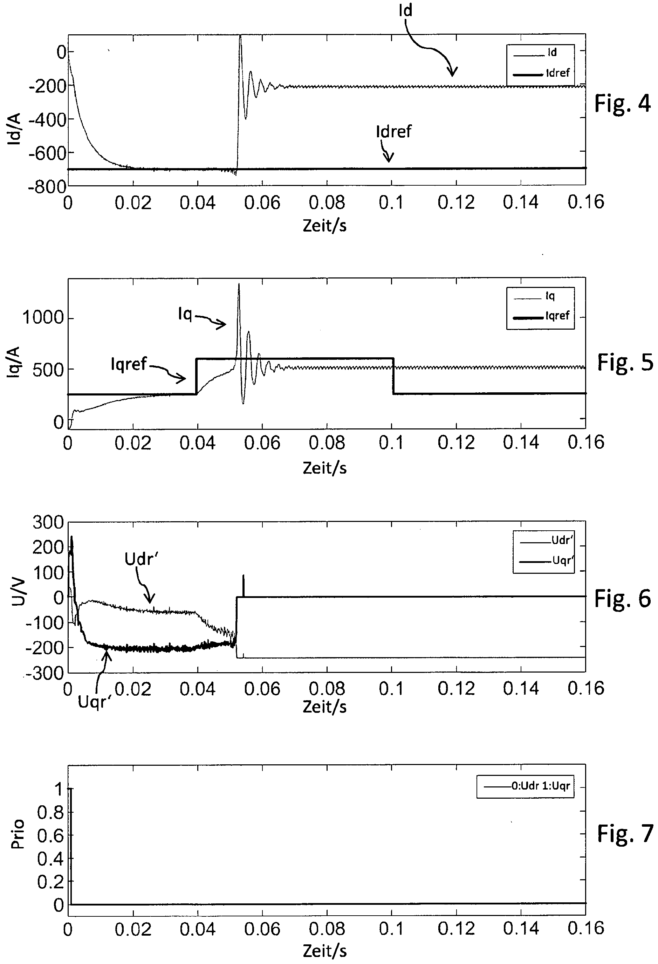

**Figuren 4 - 7** zeigen ein Beispiel des Verhaltens einer Stromregelung nach dem Stand der Technik; dargestellt ist der Verlauf verschiedener Größen als Funktion der in Sekunden angegebenen Zeit. Dabei zeigt Fig. 4 den Verlauf der in Ampere angegebenen Stromkomponente Id sowie eines Sollwerts Idref für diese Stromkomponente. Fig. 5 zeigt den Verlauf der in Ampere angegebenen Stromkomponente Iq sowie eines Sollwerts Iqref für diese Stromkomponente. Fig. 6 zeigt den Verlauf der Stellwerte *Udr'* und *Uqr'* der Spannungskomponenten, angegeben in Volt. Fig. 7 zeigt an, welche der Spannungskomponenten Udr, Uqr jeweils priorisiert wird; ein **Wert "0" der** Kurve bedeutet dabei Priorisierung von Udr, ein **Wert "1" der Kurve bedeutet Priorisierung von Uqr.** Abgesehen vom Start der Simulation wird in diesem dem Stand der Technik entsprechenden Beispiel Udr priorisiert. Wie Fig. 4 und Fig. 5 zu entnehmen, ist für Id ein konstanter Wert als Sollwert Idref vorgesehen, im Sollwert Iqref tritt eine Stufe auf. Unmittelbar nach Beginn der Simulation nähern sich sowohl Iq als auch Id ihren Sollwerten an. Die angeforderte Stufe in Iqref führt jedoch zu starken Schwankungen sowohl von Iq als auch von Id. Auch zu Zeiten nach Ende der Stufe in Iqref bleiben sowohl Iq als auch Id von ihren aktuell geforderten Sollwerten entfernt. Dies bedeutet, die Synchronmaschine ist in diesem Zustand nicht mehr steuerbar.

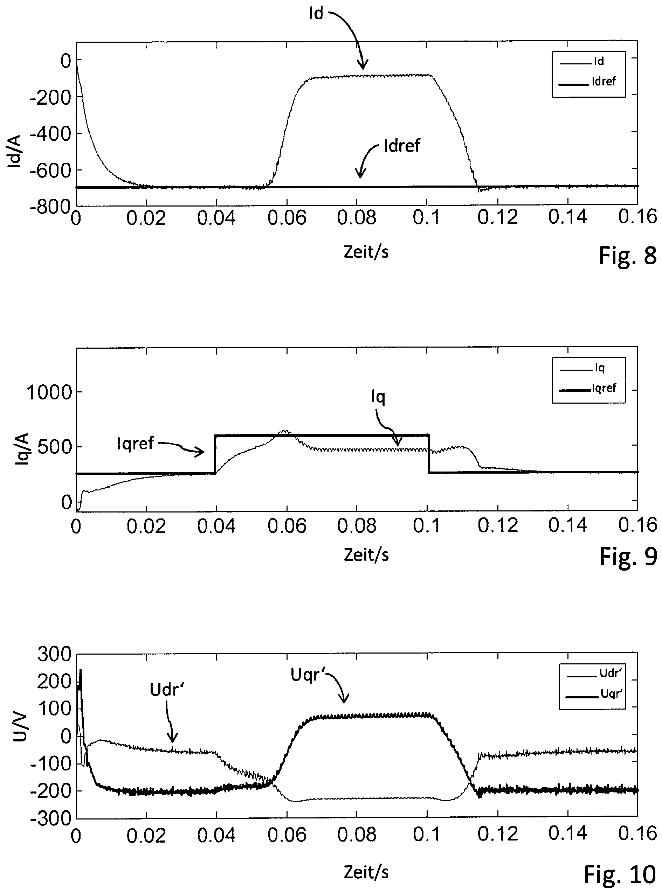

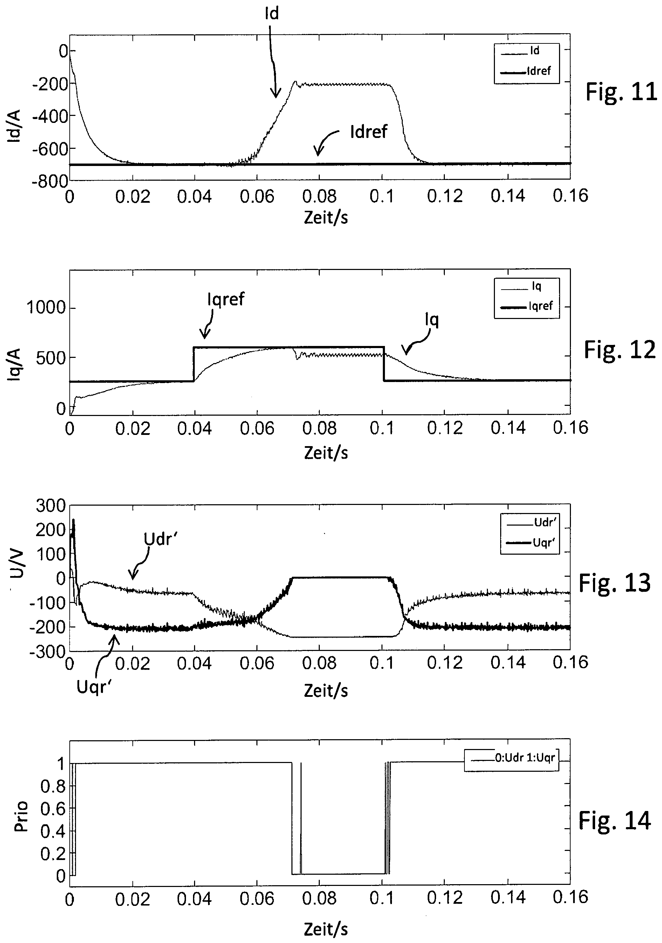

**Figuren 8 - 10** zeigen ein Beispiel des Verhaltens einer weiteren Stromregelung nach dem Stand der Technik, genauer einer proportionalen Reduktion oder proportionalen Priorisierung, wie oben zum Stand der Technik erläutert; dargestellt ist der Verlauf verschiedener Größen als Funktion der in Sekunden angegebenen Zeit. Dabei zeigt Fig. 8 den Verlauf der in Ampere angegebenen Stromkomponente Id sowie eines Sollwerts Idref für diese Stromkomponente. Fig. 9 zeigt den Verlauf der in Ampere angegebenen Stromkomponente Iq sowie eines Sollwerts Iqref für diese Stromkomponente. Fig. 10 zeigt den Verlauf der Stellwerte *Udr'* und *Uqr'* der Spannungskomponenten, angegeben in Volt. Wie Fig. 8 und Fig. 9 zu entnehmen, ist für Id ein konstanter Wert als Sollwert Idref vorgesehen, im Sollwert Iqref tritt eine Stufe auf. Unmittelbar nach Beginn der Simulation nähern sich sowohl Iq als auch Id ihren Sollwerten an. Das Auftreten der Stufe in Iqref führt zu einem Ansteigen von Iq in die Nähe des geforderten neuen Sollwerts, wobei dieser allerdings vorübergehend überschritten wird. Nach Ende der Stufe in Iqref nimmt Iq letztlich wieder den dann neuen Sollwert Iqref an, allerdings mit einer Übergangsphase, die unregelmäßiges Verhalten von Iq zeigt. Ferner weichen auch in einem stationären Zustand, z.B. im Zeitintervall zwischen 0,08 und 0,1 Sekunden, die Werte von Iq und Id stärker von ihren jeweiligen Sollwerten ab, als dies bei der erfindungsgemäßen Stromregelung (vergleiche Fig. 11 und Fig. 12) der Fall ist.

**Figuren 11 - 14** zeigen ein Beispiel des Verhaltens einer Stromregelung nach dem erfindungsgemäßen Verfahren; analog zu den Figuren 4 bis 7 ist der Verlauf verschiedener Größen als Funktion der in Sekunden angegebenen Zeit dargestellt. Dabei zeigt Fig. 11 den Verlauf der in Ampere angegebenen Stromkomponente Id sowie eines Sollwerts Idref für diese Stromkomponente. Fig. 12 zeigt den Verlauf der in Ampere angegebenen Stromkomponente Iq sowie eines Sollwerts Iqref für diese Stromkomponente. Fig. 13 zeigt den Verlauf der Stellwerte *Udr'* und *Uqr'* der Spannungskomponenten Udr und Uqr, angegeben in Volt. Fig. 14 zeigt an, welche der Spannungskomponenten Udr und Uqr jeweils priorisiert wird; ein **Wert "0" der** Kurve bedeutet dabei Priorisierung von Udr, **ein Wert "1" der Kurve bedeutet** Priorisierung von Uqr. Wie aus Fig. 14 ersichtlich, wechselt beim erfindungsgemäßen Verfahren im Zeitverlauf die priorisierte Spannungskomponente mehrmals.

Entsprechend der Situation beim Stand der Technik, d.h. bei Figuren 4 und 5 sowie 8 und 9, ist auch hier, siehe Figuren 11 und 12, für Id ein konstanter Wert als Sollwert Idref vorgesehen, und im Sollwert Iqref tritt eine Stufe auf. Unmittelbar nach Beginn der Simulation nähern sich sowohl Iq als auch Id ihren Sollwerten an. Bei Auftreten der Stufe im Sollwert Iqref nähert sich Iq dem neuen Referenzwert an. Nach Ende der Stufe fällt Iq wieder auf den dann wieder geltenden ursprünglichen Referenzwert ab. Im Zeitfenster der Stufe bei Iqref tritt eine Abweichung von Id vom Referenzwert auf. Wie gesehen, folgt der das Drehmoment vorwiegend bestimmende Strom Iq jedoch den Sollwertvorgaben, das heißt, die Synchronmaschine bleibt steuerbar.

**Bezugszeichenliste**

| | |
|---|---|
| 10 | Vorrichtung |
| 11 | Stromregler (d-Komponente) |
| 12 | Stromregler (q-Komponente) |
| 13 | Prozessoreinheit |
| 14 | Speichereinheit |
| 15 | Programmanweisungen |
| 30 | Synchronmaschine |
| 31 | Phase |
| 32 | Phase |
| 33 | Phase |
| 35 | Maschinenparameter |
| 40 | Ansteuereinheit |
| 90 | Anordnung |
| 101 | Multiplikationsschritt |
| 102 | Vorzeichenbestimmung |
| 103 | Vorzeichenbestimmung |
| 104 | Vorzeichenvergleich |
| 105 | Bestimmung Priorisierung |
| 106 | Begrenzung |
| 107 | Begrenzung |
| 201 | Bestimmung Kurzschlussstrom |
| 202 | Differenzbildung |
| 203 | Differenzbildung |
| 204 | Vorzeichenvergleich |

**Patentansprüche**

1. Verfahren zur Stellwertbegrenzung bei einer feldorientierten Stromregelung einer mehrphasigen Permanentmagnet-Synchronmaschine (30), wobei das Verfahren die Schritte aufweist:

   Ermitteln von Stromstärken für einzelne Statorphasen (31, 32, 33) der mehrphasigen Permanentmagnet-Synchronmaschine (30);
   Durchführen einer Park-Transformation der ermittelten Stromstärken auf ein zweidimensionales Park-Koordinatensystem (d,q), zum Erhalt von Stromkomponenten Id und Iq;
   separates Bestimmen von Stellwerten (11, 12) für Spannungskomponenten Uqr und Udr, welche Stellgrößen für die Stromkomponenten Iq bzw. Id sind;
   Rücktransformieren der Spannungskomponenten Uqr und Udr auf entsprechende mehrphasige Spannungswerte; und
   Anlegen der ermittelten mehrphasigen Spannungswerte an entsprechende Statorphasen (31, 32, 33);
   **dadurch gekennzeichnet, dass**
   die Stellwerte für die Stellgrößen Uqr und Udr bei nicht ausreichender aktuell verfügbarer Maximalspannung derart betriebspunktabhängig begrenzt werden, dass diejenige der Spannungskomponenten Uqr, Udr priorisiert wird (104), deren entsprechende Komponente der induzierten Spannung $Uq_{ind}$, $Ud_{ind}$ den Strom am stärksten von einem Kurzschlussstrompunkt wegtreibt,
   der Kurzschlussstrompunkt der Punkt in dem zweidimensionales Park-Koordinatensystem (d, q) ist, welcher einem Kurzschlussstrom entspricht, und
   Priorisieren einer Spannungskomponente bedeutet, dass die priorisierte Spannungskomponente, betragsmäßig begrenzt durch die aktuell verfügbare Maximalspannung, den für die Stromregelung erforderlichen Wert erhält, auf Kosten der jeweils anderen Spannungskomponente.

2. Verfahren nach Anspruch 1, wobei

   Udr priorisiert wird, wenn das Vorzeichen von Iq - Iqks mit dem Vorzeichen von Id - Idks übereinstimmt, wobei Iqks die q-Komponente eines Kurzschlussstroms der mehrphasigen Permanentmagnet-Synchronmaschine (30) und Idks die d-Komponente des Kurzschlussstroms der mehrphasigen Permanentmagnet-Synchronmaschine (30) bezeichnet, und

andernfalls Uqr priorisiert wird.

3. Verfahren nach Anspruch 2, wobei der Kurzschlussstrom der mehrphasigen Permanentmagnet-Synchronmaschine (30) aus Maschinenparametern (35) der mehrphasigen Permanentmagnet-Synchronmaschine und einer Drehzahl $\Omega$ der mehrphasigen Permanentmagnet-Synchronmaschine (30) bestimmt wird.

4. Verfahren nach Anspruch 1, wobei

ein Vorzeichen einer Drehzahl $\Omega$ der mehrphasigen Permanentmagnet-Synchronmaschine (30), ein Vorzeichen des separat ermittelten Stellwerts von Udr und ein Vorzeichen des separat ermittelten Stellwerts von Uqr ermittelt werden,

Uqr priorisiert wird, falls das Vorzeichen des Stellwerts von Udr gleich ist dem Vorzeichen des Produkts aus $\Omega$ und dem Stellwert von Uqr, und

andernfalls Udr priorisiert wird.

5. Vorrichtung (10) zur Stellwertbegrenzung bei einer feldorientierten Stromregelung einer mehrphasigen Permanentmagnet-Synchronmaschine (30), wobei

die Vorrichtung (10) mindestens eine Prozessoreinheit (13) zur Datenverarbeitung und eine Speichereinheit (14) zur Datenspeicherung und Stromregler (11, 12) für die Ermittlung von Stellwerten für Spannungskomponenten Udr und Uqr aufweist,

Id und Iq Komponenten eines Phasenstroms der mehrphasigen Permanentmagnet-Synchronmaschine (30) in einem durch eine Park-Transformation erhaltenen Park-Koordinatensystem (d,q) sind, und

die Spannungskomponente Udr eine Stellgröße für die Komponente Id des Phasenstroms der mehrphasigen Permanentmagnet-Synchronmaschine (30) ist und die Spannungskomponente Uqr eine Stellgröße für die Komponente Iq des Phasenstroms der mehrphasigen Permanentmagnet-Synchronmaschine (30) ist,

**dadurch gekennzeichnet, dass**

die Vorrichtung (10) Programmanweisungen (15) gespeichert hat und dazu ausgebildet ist, durch Abarbeiten der Programmanweisungen (15) ein Verfahren durchzuführen, die Stellwerte für die Stellgrößen Uqr und Udr bei nicht ausreichender aktuell verfügbarer Maximalspannung derart betriebspunktabhängig zu begrenzen (106, 107), daß diejenige der Spannungskomponenten Uqr, Udr priorisiert wird (104), deren entsprechende Komponente der induzierten Spannung Uq$_{ind}$, Ud$_{ind}$ den Strom am stärksten von einem Kurzschlussstrompunkt wegtreibt, wobei

der Kurzschlussstrompunkt der Punkt in dem zweidimensionales Park-Koordinatensystem (d, q) ist, welcher einem Kurzschlussstrom entspricht, und

Priorisieren einer Spannungskomponente bedeutet, dass die priorisierte Spannungskomponente, betragsmäßig begrenzt durch die aktuell verfügbare Maximalspannung, den für die Stromregelung erforderlichen Wert erhält, auf Kosten der jeweils anderen Spannungskomponente.

6. Vorrichtung (10) nach Anspruch 5, wobei

in der Speichereinheit (14) der Vorrichtung (10) Maschinenparameter (35) der mehrphasigen Permanentmagnet-Synchronmaschine (30) gespeichert sind,

die Vorrichtung (10) dazu ausgebildet ist, einen Wert einer Drehzahl $\Omega$ der mehrphasigen Permanentmagnet-Synchronmaschine (30) zu empfangen,

die Vorrichtung (10) programmiert ist unter Verwendung der Maschinenparameter (35) und der Drehzahl $\Omega$ einen Kurzschlussstrom der mehrphasigen Permanentmagnet-Synchronmaschine (30) zu ermitteln,

Udr priorisiert wird, wenn das Vorzeichen von Iq - Iqks mit dem Vorzeichen von Id - Idks übereinstimmt, wobei Iqks die q-Komponente des Kurzschlussstroms der mehrphasigen Permanentmagnet-Synchronmaschine (30) und Idks die d-Komponente des Kurzschlussstroms der mehrphasigen Permanentmagnet-Synchronmaschine (30) bezeichnet, und

andernfalls Uqr priorisiert wird.

7. Vorrichtung (10) nach Anspruch 5, wobei

die Vorrichtung (10) **dazu ausgebildet ist, ein Vorzeichen einer Drehzahl** $\Omega$ **der** mehrphasigen Permanent-magnet-Synchronmaschine (30), ein Vorzeichen eines separat ermittelten Stellwerts der Stellgröße Udr für die Id-Komponente und ein Vorzeichen eines separat ermittelten Stellwerts der Stellgröße Uqr für die Iq-Komponente zu ermitteln,

Uqr priorisiert wird, falls das Vorzeichen des Stellwerts von Udr gleich ist dem Vorzeichen des Produkts aus $\Omega$ **und** dem Stellwert für Uqr, und

andernfalls Udr priorisiert wird.

## Claims

1. A method for limiting setpoint values in a field-oriented current regulation of a multi-phase permanent magnet synchronous machine (30), wherein the method has the steps of:

   determining current strengths for individual stator phases (31, 32, 33) of the multi-phase permanent magnet synchronous machine (30);
   performing a Park transform of the determined current strengths on a two-dimensional Park coordinate system (d, q) in order to obtain the current components Id and Iq;
   separately determining the setpoint values (11, 12) for the voltage components Uqr and Udr, which are setpoint variables for the current components Iq and Id;
   reverse transforming the voltage components Uqr and Udr to corresponding multi-phase voltage values; and
   applying the determined multi-phase voltage values to corresponding stator phases (31, 32, 33);
   **characterised in that**
   if the currently available maximum voltage is not sufficient, the setpoint values for the setpoint variables Uqr and Udr are limited depending on the operating point in such a way that that one of the voltage components Uqr, Udr is prioritised (104) whose corresponding
   component of the induced voltage $Uq_{ind}$, $Ud_{ind}$ drives the current most strongly away from a short-circuit current point,
   the short-circuit current point is the point in the two-dimensional Park coordinate system (d, q) which corresponds to a short-circuit current, and
   prioritising of a voltage component means that the prioritised voltage component, limited in absolute value by the currently available maximum voltage, receives the value required for current regulation, at the expense of the respective other voltage component.

2. The method according to claim 1, wherein

   Udr is prioritised if the sign of Iq - Iqks coincides with the sign of Id - Idks, wherein Iqks denotes the q component of a short-circuit current of the multi-phase permanent magnet synchronous machine (30) and Idks denotes the d component of the short-circuit current of the multi-phase permanent magnet synchronous machine (30), and otherwise Uqr is prioritised.

3. The method according to claim 2, wherein the short-circuit current of the multi-phase permanent magnet synchronous machine (30) is determined from machine parameters (35) of the multi-phase permanent magnet synchronous machine and a rotational speed $\Omega$ of the multi-phase permanent magnet synchronous machine (30).

4. The method according to claim 1, wherein

   **a sign of a rotational speed** $\Omega$ **of the** multi-phase permanent magnet synchronous machine (30), a sign of the separately determined setpoint value of Udr, and a sign of the separately determined setpoint value of Uqr are determined,
   Uqr is prioritised if the sign of the setpoint value of Udr is equal to the sign of the product of $\Omega$ **and** the setpoint value of Uqr, and
   otherwise Udr is prioritised.

5. A device (10) for limiting setpoint values in a field-oriented current regulation of a multi-phase permanent magnet synchronous machine (30), wherein

   the device (10) has at least one processor unit (13) for data processing and a memory unit (14) for data storage and current regulators (11, 12) for determining setpoint values for the voltage components Udr and Uqr,

Id and Iq are components of a phase current of the multi-phase permanent magnet synchronous machine (30) in a Park coordinate system (d, q) obtained by a Park transform, and

the voltage component Udr is a setpoint variable for the component Id of the phase current of the multi-phase permanent magnet synchronous machine (30), and

the voltage component Uqr is a setpoint variable for the component Iq of the phase current of the multi-phase permanent magnet synchronous machine (30),

**characterised in that**

the device (10) has program instructions (15) stored and is designed to, by processing the program instructions (15), carry out a method of limiting (106, 107) the setpoint values for the setpoint variables Uqr and Udr, if the currently available maximum voltage is not sufficient, depending on the operating point in such a way that that one of the voltage components Uqr, Udr is prioritised (104) whose corresponding component of the induced voltage $Uq_{ind}$, $Ud_{ind}$ drives the current most strongly away from a short-circuit current point, wherein

the short-circuit current point is the point in the two-dimensional Park coordinate system (d, q) which corresponds to a short-circuit current, and

prioritising of a voltage component means that the prioritised voltage component, limited in absolute value by the currently available maximum voltage, receives the value required for current regulation, at the expense of the respective other voltage component.

6. The device (10) according to claim 5, wherein

machine parameters (35) of the multi-phase permanent magnet synchronous machine (30) are stored in the memory unit (14) of the device (10),

the device (10) is designed to receive a value of a rotational speed $\Omega$ of the multi-phase permanent magnet synchronous machine (30),

the device (10) is programmed to determine a short-circuit current of the multi-phase permanent magnet synchronous machine (30) using the machine parameters (35) and the rotational speed S2,

Udr is prioritised if the sign of Iq - Iqks coincides with the sign of Id - Idks, wherein Iqks denotes the q component of the short-circuit current of the multi-phase permanent magnet synchronous machine (30) and Idks denotes the d component of the short-circuit current of the multi-phase permanent magnet synchronous machine (30), and otherwise Uqr is prioritised.

7. The device (10) according to claim 5, wherein

the device (10) **is designed to determine a sign of a rotational speed** $\Omega$ **of the** multi-phase permanent magnet synchronous machine (30), a sign of a separately determined setpoint value of the setpoint variable Udr for the Id component and a sign of a separately determined setpoint value of the setpoint variable Uqr for the Iq component,

Uqr is prioritised if the sign of the setpoint value of IIdr is equal to the sign of the product of $\Omega$ **and** the setpoint value for Uqr, and

otherwise Udr is prioritised.

## Revendications

1. Procédé permettant de limiter la valeur de réglage lors de la régulation de courant orientée champ d'une machine synchrone polyphasée à aimants permanents (30), le procédé comportant les étapes consistant à :

déterminer les intensités de courant pour les phases de stator individuelles (31, 32, 33) de la machine synchrone polyphasée à aimants permanents (30) ;

exécuter une transformée de Park des intensités de courant déterminées sur un système de coordonnées de Park bidimensionnel (d, q) pour obtenir des composantes de courant Id et Iq ;

déterminer séparément des valeurs de réglage (11, 12) pour les composantes de tension Uqr et Udr, qui sont des grandeurs de réglage pour les composantes de courant Iq ou Id ;

appliquer la transformée inverse des composantes de tension Uqr et Udr aux valeurs de tension polyphasées correspondantes ; et

appliquer les valeurs de tension polyphasées déterminées aux phases de stator correspondantes (31, 32, 33) ;

**caractérisé en ce que**

les valeurs de réglage pour les grandeurs de réglage Uqr et Udr sont limitées en fonction du point de fonctionnement si la tension maximale actuellement disponible n'est pas suffisante, de telle sorte que celle des composantes de tension Uqr, Udr soit prioritaire (104), dont la composante

correspondante de la tension induite $Uq_{ind}$, $Ud_{ind}$ éloigne le plus fortement le courant d'un point de courant de court-circuit,

le point de courant de court-circuit est le point dans le système de coordonnées de Park bidimensionnel (d, q) qui correspond à un courant de court-circuit et

donner la priorité à une composante de tension signifie que la composante de tension prioritaire, limitée en quantité par la tension maximale actuellement disponible, reçoit la valeur requise pour la régulation de courant aux dépens de l'autre composante de tension respective.

**2.** Procédé selon la revendication 1, dans lequel

Udr est prioritaire si le signe de Iq - Iqks correspond au signe de Id - Idks, Iqks désignant la composante q d'un courant de court-circuit de la machine synchrone polyphasée à aimants permanents (30) et Idks désignant la composante d du courant de court-circuit de la machine synchrone polyphasée à aimants permanents (30) et sinon Uqr est prioritaire.

**3.** Procédé selon la revendication 2, dans lequel le courant de court-circuit de la machine synchrone polyphasée à aimants permanents (30) est déterminé à partir des paramètres machine (35) de la machine synchrone polyphasée à aimants permanents et d'une vitesse $\Omega$ de la machine synchrone polyphasée à aimants permanents (30).

**4.** Procédé selon la revendication 1, dans lequel

**un signe d'une vitesse** $\Omega$ **de la** machine synchrone polyphasée à aimants permanents (30), un signe de la valeur de réglage de Udr déterminée séparément et un signe de la valeur de réglage de Uqr déterminée séparément sont déterminés,

Uqr est prioritaire si le signe de la grandeur de réglage de Udr est le même que le signe du produit de $\Omega$ **et** de la variable de réglage de Uqr et

sinon Udr est prioritaire.

**5.** Dispositif (10) permettant de limiter la valeur de réglage lors de la régulation de courant orientée champ d'une machine synchrone polyphasée à aimants permanents (30),

le dispositif (10) comportant au moins une unité de traitement (13) permettant de traiter des données et une unité de mémoire (14) permettant de stocker des données et des régulateurs de courant (11, 12) pour déterminer les valeurs de réglage pour les composantes de tension Udr et Uqr,

Id et Iq étant des composantes d'un courant de phase de la machine synchrone polyphasée à aimants permanents (30) dans un système de coordonnées de Park (d, q) obtenu par une transformée de Park et

la composante de tension Udr étant une grandeur de réglage pour la composante Id du courant de phase de la machine synchrone polyphasée à aimants permanents (30) et

la composante de tension Uqr étant une grandeur de réglage pour la composante Iq du courant de phase de la machine synchrone polyphasée à aimants permanents (30),

**caractérisé en ce que**

le dispositif (10) a stocké des instructions de programme (15) et est conçu pour exécuter un procédé en traitant les instructions de programme (15) pour limiter (106, 107) les valeurs de réglage pour les grandeurs de réglage Uqr et Udr en fonction du point de fonctionnement si la tension maximale actuellement disponible n'est pas suffisante, de telle sorte que celle des composantes de tension Uqr, Udr soit prioritaire (104) dont la composante correspondante de la tension induite $Uq_{ind}$, $Ud_{ind}$ éloigne le plus fortement le courant d'un point de courant de court-circuit, dans lequel

le point de courant de court-circuit est le point dans le système de coordonnées de Park bidimensionnel (d, q) qui correspond à un courant de court-circuit et

donner la priorité à une composante de tension signifie que la composante de tension prioritaire, limitée en quantité par la tension maximale actuellement disponible, reçoit la valeur requise pour la régulation de courant aux dépens de l'autre composante de tension respective.

**6.** Dispositif (10) selon la revendication 5, dans lequel

des paramètres machine (35) de la machine synchrone polyphasée à aimants permanents (30) sont stockés dans l'unité de mémoire (14) du dispositif (10),

le dispositif (10) est conçu pour recevoir une valeur d'une vitesse $\Omega$ de la machine synchrone polyphasée à aimants permanents (30),

le dispositif (10) est programmé pour déterminer un courant de court-circuit de la machine synchrone polyphasée à aimants permanents (30) à partir des paramètres machine (35) et de la vitesse S2,

Udr est prioritaire si le signe de lq - lqks correspond au signe de Id - Idks, lqks désignant la composante q du courant de court-circuit de la machine synchrone polyphasée à aimants permanents (30) et Idks désignant la composante d du courant de court-circuit de la machine synchrone polyphasée à aimants permanents (30) et sinon Uqr est prioritaire.

7. Dispositif (10) selon la revendication 5, dans lequel

le dispositif (10) **est conçu pour déterminer un signe d'une vitesse** $\Omega$ **de la** machine synchrone polyphasée à aimants permanents (30), un signe d'une valeur de réglage déterminée séparément de la grandeur de réglage Udr pour la composante Id et un signe d'une valeur de réglage déterminée séparément de la grandeur de réglage Uqr pour la composante lq,

Uqr est prioritaire si le signe de la valeur de réglage de lldr est le même que le signe du produit de $\Omega$ **et** de la valeur de réglage pour Uqr et

sinon Udr est prioritaire.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

• DE 10219826 A1

### In der Beschreibung aufgeführte Nicht-Patentliteratur

• **D. SCHRÖDER.** Elektrische Antriebe - Regelung von Antriebssystemen. Springer, 2015
• **NGUYEN PHUNG QUANG ; J.-A. DITTRICH.** Vector Control of the Three-Phase AC Machines. Springer, 2014
• Effiziente und dynamische Drehmomenteinprägung in hoch ausgenutzten Synchronmaschinen mit eingebetteten Magneten. **T. GEMAßMER.** Dissertation. Karlsruher Institut für Technologie (KIT), Fakultät für Elektrotechnik und Informationstechnik, 2015